# FASCICULE DE BREVET EUROPEEN

(11) **EP 4 313 771 B1**
(45) Date de publication et mention de la délivrance du brevet: **27.08.2025**
(21) Numéro de dépôt: 22714487.0
(22) Date de dépôt: 17.03.2022
(51) Int. Cl.: B64G 1/60, B64G 1/14, B64D 11/00, B64D 11/06, B64G 1/46, B64G 1/00, B64G 1/54

(54) **SYSTEME DE TRANSPORT DE PASSAGER PROPULSE PAR UN LANCEUR SPATIAL A SIEGE A INCLINAISON VARIABLE BASEE SUR LE FACTEUR DE CHARGE**
PERSONENTRANSPORTSYSTEM MIT EINEM VON EINER SPACE-STARTVORRICHTUNG ANGETRIEBENEN SITZ MIT AUF DEM LASTFAKTOR BASIERENDER VARIABLER NEIGUNG
PASSENGER TRANSPORT SYSTEM PROPELLED BY A SPACE LAUNCHER, HAVING A SEAT WITH VARIABLE INCLINATION BASED ON THE LOAD FACTOR

(30) Priorité: 23.03.2021 FR 2102868
(43) Date de publication de la demande: 07.02.2024
(73) Titulaire: ArianeGroup SAS, 78130 Les Mureaux (FR)
(72) Inventeur: PRAMPOLINI, Marco, 33185 LE HAILLAN (FR); DUTHEIL, Jean-Philippe, 33185 LE HAILLAN (FR); BOUE, Yoan, 33185 LE HAILLAN (FR)
(74) Mandataire: Cabinet Beau de Loménie
(86) Numéro de dépôt international: PCT/FR2022/050485
(87) Numéro de publication internationale: WO 2022/200714

(56) Documents cités:
- RU-C1- 2 586 747
- US-A- 5 979 827
- US-A1- 2002 074 457
- US-A1- 2010 240 454
- US-A1- 2014 124 626
- US-A1- 2020 143 951
- US-B1- 6 216 984

## Description

### Domaine Technique

L'invention concerne un système de transport de passager propulsé par un lanceur aérospatial, c'est-à-dire un système de transport qui est installé sur un lanceur spatial et qui est séparé dudit lanceur spatial lorsque le transport spatial atteint l'altitude et la vitesse désirée.

### Technique antérieure

On connait les systèmes de transport de passager qui sont propulsés par un lanceur spatial.

Généralement, de tels systèmes de transport effectuent des manœuvrent avec des trajectoires non rectilignes qui peuvent nécessiter un entrainement spécifique afin que les passagers puissent les supporter, notamment à cause de la vitesse importante de tels systèmes de transport.

II est connu des documents US5979827, US6216984 et US 2014/124626 des véhicules configurés pour de manœuvres à haut G .

### Exposé de l'invention

La présente invention a donc pour but principal de proposer une solution de transport qui permet de rendre plus supportable les trajectoires non rectilignes du système de transport pour les passagers lors du déplacement du système de transport.

Selon un premier aspect, l'invention concerne un système de transport selon la revendication 1.

Un tel système est notamment avantageux car il permet au passager de mieux supporter le facteur de charge subi durant le vol.

Selon une caractéristique possible, ledit au moins un siège est monté de manière fixe dans une cabine rotative selon ledit axe installée dans le véhicule.

Selon une caractéristique possible, la cabine rotative est installée dans un caisson qui est fixé dans le véhicule, la cabine rotative étant montée mobile en rotation selon l'axe dans ledit caisson.

Selon une caractéristique possible, le caisson comprend deux ouvertures destinées à permettre le passage du passager, une première ouverture formant une ouverture principale pour l'installation et le départ du passager, une seconde ouverture formant une sortie de secours, la première ouverture possédant une taille supérieure à la deuxième ouverture.

Selon une caractéristique possible, la cabine rotative comprend un revêtement de protection contre les radiations.

Selon une caractéristique possible, le revêtement de protection contre les radiations est en polyéthylène.

Selon une caractéristique possible, l'unité de commande est configurée pour maintenir la vitesse de rotation du au moins un siège inférieure à une vitesse seuil prédéfinie.

Selon une caractéristique possible, l'interface passager comprend une enceinte audio.

Selon un second aspect, l'invention concerne un ensemble comprenant un lanceur spatial et un système de transport selon l'une quelconque des caractéristiques précédentes installé sur ledit lanceur spatial.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] La figure 1 représente schématiquement un système de transport installé sur un lanceur spatial.
[Fig. 2] La figure 2 représente schématiquement l'installation de sièges dans le système de transport de la figure 1.
[Fig. 3] La figure 3 représente schématiquement un caisson comprenant une cabine rotative dans laquelle un siège passager est installé.
[Fig. 4] La figure 4 représente schématiquement le caisson de la figure 3 dans lequel le siège est incliné afin de suivre le facteur de charge subi par le passager.
[Fig. 5] La figure 5 représente schématiquement le caisson de la figure 3 dans lequel une ouverture principale est ouverte, l'interface utilisateur n'étant pas représentée.

### Description des modes de réalisation

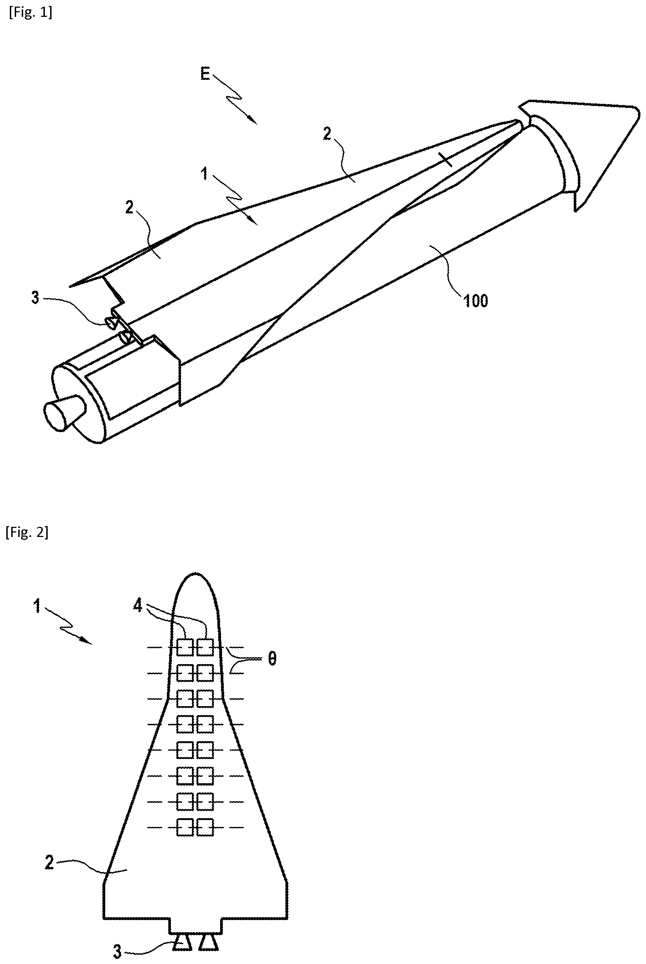

La figure 1 illustre un ensemble E comprenant système de transport 1 qui est installé sur un lanceur aérospatial 100. Le système de transport 1 est destiné au transport d'au moins un passager. Le système de transport 1, grâce à la poussée générée par le lanceur spatial 100 peut atteindre une vitesse hypersonique, par exemple entre Mach 5 et Mach 10, permettant ainsi de réaliser des trajets de plus de 10000 kilomètres en moins de deux heures.

Le système de transport 1 est de préférence un système de transport à décollage et à atterrissage verticale.

Le lanceur spatial 100 comprend un moteur fusé qui peut par exemple être un moteur fusé à propergol solide. Le moteur fusé peut également être un moteur fusé à ergols liquides. Le lanceur spatial 100 est de préférence un lanceur spatial réutilisable qui est configuré pour revenir atterrir sur une base cible après s'être détaché du système de transport 1.

Le système de transport 1 comprend un aéronef 2 qui possède une forme qui est adaptée pour les vitesses hypersoniques. L'aéronef 2 comprend des moyens de propulsion 3 qui sont configurés pour propulser l'aéronef 2 dans une direction de vol, la direction de vol de l'aéronef 2 étant notamment déterminée par la forme de l'aéronef 2. Les moyens de propulsion 3 sont des moyens de propulsion ré-allumables, et dont la poussée générée est variable. Les moyens de propulsion 3 peuvent par exemple comprendre un moteur fusé à ergols liquides.

Comme cela est illustré sur la figure 2, au moins un siège 4 est installé à l'intérieur de l'aéronef 2. Les sièges 4 étant destinés à recevoir un passager 5.durant le vol du système de transport 1. La variante illustrée sur la figure 2 comprend avantageusement une pluralité de sièges 4 qui sont installés à l'intérieur de l'aéronef 2. Les sièges 4 peuvent être des sièges en position assise ou en position couchée, ou bien des sièges qui sont mobiles entre une position assise et une position couchée. Les sièges 4 sont installés dans l'aéronef 2 de sorte à être mobile en rotation autour d'un axe θ qui est perpendiculaire à la direction de vol de l'aéronef, comme cela est illustré sur la figure 2.

Les sièges 4 comprennent chacun un capteur d'accélération 41 qui est configuré pour mesurer l'accélération subie par le siège 4 sur lequel le capteur d'accélération 41 est installé. Le capteur d'accélération 41 mesure la direction et la norme de l'accélération du siège 4.

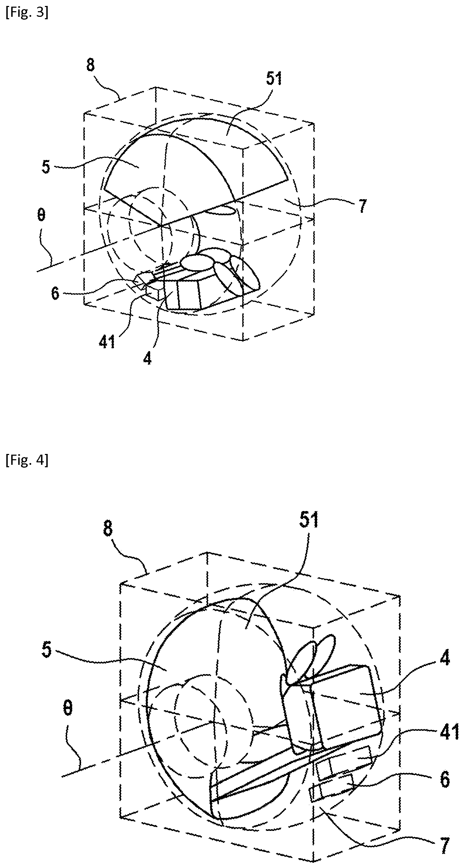

Le système de transport 1 comprend également au moins une interface passager 5, chaque interface passager 5 étant associée à un siège 4 et est configurée pour afficher des images au passager lorsque le passager est installé sur ledit siège 4. Comme illustré sur les figures 3 et 4, l'interface passager 5 comprend un écran 51 qui est situé en regard de la zone du siège 4 destiné à recevoir la tête du passager. L'écran 51 est solidaire avec le siège 4 de sorte à suivre les mouvements de rotation dudit siège 4 et ainsi être fixe par rapport audit siège 4. L'écran 51 couvre l'intégralité du champ de vision du passager lorsque le passager est installé dans le siège 4.

L'interface passager 5 peut également comprendre une enceinte audio qui permet de diffuser un son au passager lorsque ledit passager est installé dans le siège 4.

Le système de transport 1 comprend également une unité de commande 6 qui est reliée à chaque siège 4, à chaque capteur d'accélération 41, et à chaque interface utilisateur 5. L'unité de commande 6 comprend une mémoire sur laquelle un procédé est enregistré et un processeur qui est configuré pour mettre en œuvre le procédé enregistré sur la mémoire.

Pour chaque siège 4, l'unité de commande 6 utilise l'accélération du siège 4 mesurée par le capteur d'accélération 41 pour calculer le facteur de charge qui est subi par ledit siège 4, et donc par le passager installé sur le siège. L'unité de commande 6 calcule la direction et la norme du facteur de charge. Le calcul du facteur de charge de chaque siège par l'unité de commande 6 est réalisé en temps réel et est continu durant tout le vol.

A partir du calcul de charge calculé, pour chaque siège 4, l'unité de commande 6 contrôle la rotation du siège 4 autour de l'axe afin de maintenir le siège 4 fixe par rapport au facteur de charge subi par ledit siège 4, et donc fixe par rapport au facteur de charge subi par le passager installé sur ledit siège 4. Une telle rotation du siège 4 est par exemple illustrée sur la figure 4. Pour ce faire, l'unité de commande 6 peut par exemple contrôler un servomoteur qui entraine le siège 4 en rotation autour de l'axe θ.

Le fait que le siège 4 suive le facteur de charge subi par le passager durant le vol permet de leurrer le ressenti du passager afin de lui donner l'impression que la trajectoire suivie par le système de transport est toujours rectiligne durant le vol.

En outre, le fait que le passager reste fixe par rapport au facteur de charge subi permet de rendre plus facilement supportable ledit facteur de charge subi durant le vol, le facteur de charge subi par le passager restant dans la direction la plus confortable pour ledit passager. Par exemple un facteur de charge subi de face est plus confortable qu'un facteur de charge de même norme dirigé de haut en bas pour le passager, de la tête vers les pieds.

La présence de l'interface passager 5 qui affiche des images avec un écran 51 qui reste fixe dans le référentiel du passager durant le vol permet d'accentuer le leurre pour les sens dudit passager.

L'unité de commande 6 limite de préférence la vitesse de rotation des sièges 4 en dessous d'une vitesse de rotation seuil qui est prédéfinie afin d'améliorer le confort du passager.

Comme cela est illustré sur les figures 3 à 5, chaque siège 4 peut être intégré dans une cabine rotative 7. Chaque siège 4 est installé de manière fixe dans la cabine rotative 7 de sorte que la rotation du siège 4 autour de l'axe est obtenu par rotation de la cabine rotative 7 autour dudit axe θ. La cabine rotative 7 peut, comme dans la variante de réalisation illustrée sur les figures, être en forme d'un cylindre de révolution d'axe θ, le siège 4 étant installé à l'intérieur du cylindre. L'écran 51 de l'interface passager 5 peut être disposé sur la surface intérieure du cylindre, en regard de la zone du siège 4 destinée à recevoir la tête du passager de sorte à couvrir tout le champ de vision du passager. De manière préférentielle, chaque cabine rotative 7 contient un unique siège 4. Une telle cabine rotative 7 permet d'accentuer le leurre des sens passager car l'intégralité de l'environnement du passager reste fixe dans son référentiel.

Chaque cabine rotative 7 peut être installée dans un caisson 8, la cabine rotative 7 étant montée mobile en rotation selon l'axe θ dans ledit caisson 8. Le caisson 8 est destiné à être installé dans l'aéronef 2 de sorte à rester fixe par rapport audit aéronef 2. Un tel caisson 8 permet un embarquement et un débarquement plus aisé des passagers par simple chargement et déchargement des caissons 8.

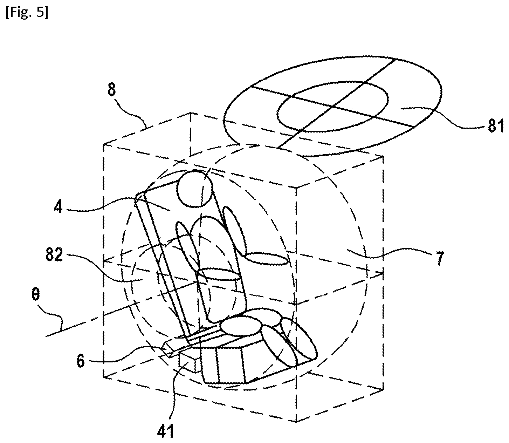

Dans la variante illustrée sur la figure 5, le caisson 8 comprend une première ouverture 81 qui forme une ouverture principale par laquelle le passager passe pour s'installer dans la cabine rotative 7 ou pour quitter ladite cabine rotative 7. Le caisson 8 comprend également une seconde ouverture 82, qui comprend une taille plus réduite que la première ouverture 81 et qui est située sur une face différente dudit caisson 8. La seconde ouverture 82 forme une ouverture de secours par laquelle le passager peut passer en cas d'urgence.

La cabine rotative 7 peut comprendre un revêtement de protection contre les radiations, qui peut par exemple être en polyéthylène, et notamment du polyéthylène haute densité. Le revêtement de protection permet d'assurer une protection pour le passager contre les rayonnements émis par le soleil durant le vol.

## Revendications

1. Système de transport (1) comprenant un véhicule (2), le véhicule (2) comprenant au moins un siège (4) destiné à recevoir un passager, ledit siège ou chacun desdits sièges étant mobile en rotation autour d'un axe (θ) perpendiculaire à la direction de déplacement du véhicule (2) et comportant :
- un capteur d'accélération (41) pour mesurer l'accélération de chaque au moins un siège (4),
- une interface passager (5) comprenant un écran (51) destiné à afficher des images au passager installé sur ledit siège (4), l'écran (51) étant couplé au siège (4) auquel il est associé de sorte à rester dans une position fixe par rapport audit siège (4), et
- une unité de commande (6) qui est reliée au capteur d'accélération (41) et au siège (4) associé, l'unité de commande (6) étant configurée, d'une part, pour calculer un facteur de charge subi par le passager installé sur le siège (4) correspondant à partir de l'accélération dudit siège (4), et, d'autre part, pour contrôler la rotation dudit siège (4) durant le fonctionnement du système de transport (1) afin de maintenir la position du siège (4) fixe par rapport au facteur de charge subi par le passager tout au long du vol **caractérisé en ce que** l'écran (51) est configuré pour couvrir tout le champ de vision du passager installé sur le siège (4).

2. Système de transport (1) selon la revendication 1, dans lequel ledit au moins un siège (4) est monté de manière fixe dans une cabine rotative (7) selon l'axe (θ) installée dans le véhicule (2).

3. Système de transport (1) selon la revendication 2, dans lequel la cabine rotative (7) est installée dans un caisson (8) qui est fixé dans le véhicule (2), la cabine rotative (7) étant montée mobile en rotation selon l'axe (θ) dans ledit caisson (8).

4. Système de transport (1) selon la revendication 3, dans lequel le caisson (8) comprend deux ouvertures destinées à permettre le passage du passager, une première ouverture (81) formant une ouverture principale pour l'installation et le départ du passager, une seconde ouverture (82) formant une sortie de secours, la première ouverture (81) possédant une taille supérieure à la deuxième ouverture (82).

5. Système de transport (1) selon l'une quelconque des revendications 2 à 4, dans lequel la cabine rotative (7) comprend un revêtement de protection contre les radiations.

6. Système de transport (1) selon la revendication 5, dans lequel le revêtement de protection contre les radiations est en polyéthylène.

7. Système de transport (1) selon l'une quelconque des revendications 1 à 6, dans lequel l'unité de commande (6) est configurée pour maintenir la vitesse de rotation du siège (4) inférieure à une vitesse seuil prédéfinie.

8. Système de transport (1) selon l'une quelconque des revendications 1 à 7, dans lequel l'interface passager (5) comprend une enceinte audio.

9. Ensemble (E) comprenant un lanceur spatial (100) et un système de transport (1) selon l'une des revendications 1 à 8 installé sur ledit lanceur spatial (100).

## Patentansprüche

1. Transportsystem (1), das ein Fahrzeug (2) umfasst, wobei das Fahrzeug (2) mindestens einen Sitz (4) zur Aufnahme eines Passagiers umfasst, wobei der Sitz oder jeder der Sitze um eine zur Bewegungsrichtung des Fahrzeugs (2) senkrechte Achse (θ) rotationsbeweglich ist und umfasst:
- einen Beschleunigungssensor (41) zum Messen der Beschleunigung jedes der mindestens einen Sitze (4),
- eine Passagierschnittstelle (5), die einen Bildschirm (51) umfasst, der zur Anzeige von Bildern für den auf dem Sitz (4) sitzenden Passagier bestimmt ist, wobei der Bildschirm (51) mit dem ihm zugeordneten Sitz (4) so gekoppelt ist, dass er relativ zum Sitz (4) in einer festen Position bleibt, und
- eine Steuereinheit (6), die mit dem Beschleunigungssensor (41) und dem zugeordneten Sitz (4) verbunden ist, wobei die Steuereinheit (6) einerseits dazu ausgelegt ist, einen vom Passagier auf dem entsprechenden Sitz (4) erfahrenen Belastungsfaktor aus der Beschleunigung des Sitzes (4) zu berechnen, und zum anderen die Drehung des Sitzes (4) während des Betriebs des Transportsystems (1) zu steuern, um die Position des Sitzes (4) in Bezug auf den vom Passagier erfahrenen Belastungsfaktor während des gesamten Fluges zu halten, **dadurch gekennzeichnet, dass** der Bildschirm (51) zur Abdeckung des gesamten Blickfelds des auf dem Sitz (4) sitzenden Passagier ausgelegt ist.

2. Transportsystem (1) nach Anspruch 1, wobei der mindestens eine Sitz (4) fest in einer um die Achse (θ) drehbaren Kabine (7) angebracht ist, die in dem Fahrzeug (2) installiert ist.

3. Transportsystem (1) nach Anspruch 2, wobei die drehbare Kabine (7) in einem Gehäuse (8) installiert ist, das im Fahrzeug (2) befestigt ist, wobei die drehbare Kabine (7) in dem Gehäuse (8) um die Achse (θ) rotationsbeweglich angebracht ist.

4. Transportsystem (1) nach Anspruch 3, wobei das Gehäuse (8) zwei Öffnungen umfasst, die bestimmt sind, den Durchgang des Passagiers zu gestatten, wobei eine erste Öffnung (81) eine Hauptöffnung zum Einsteigen und Aussteigen des Passagiers bildet, wobei eine zweite Öffnung (82) einen Notausstieg bildet, wobei die erste Öffnung (81) größer ist als die zweite Öffnung (82).

5. Transportsystem (1) nach einem der Ansprüche 2 bis 4, wobei die drehbare Kabine (7) eine Strahlenschutzverkleidung umfasst.

6. Transportsystem (1) nach Anspruch 5, wobei die Strahlenschutzverkleidung aus Polyethylen ist.

7. Transportsystem (1) nach einem der Ansprüche 1 bis 6, wobei die Steuereinheit (6) dazu ausgelegt ist, die Drehgeschwindigkeit des Sitzes (4) unter einer vordefinierten Schwellenwertgeschwindigkeit zu halten.

8. Transportsystem (1) nach einem der Ansprüche 1 bis 7, wobei die Passagierschnittstelle (5) eine Audioanlage umfasst.

9. Anordnung (E), umfassend eine Space-Startvorrichtung (100) und ein Transportsystem (1) nach einem der Ansprüche 1 bis 8, das auf der Space-Startvorrichtung (100) installiert ist.

## Claims

1. A transport system (1) including a (2), the vehicle (2) comprising at least one seat (4) intended to receive a passenger, said seat or each of said seats being movable in rotation about an axis (θ) perpendicular to the direction of movement of the vehicle (2) and including:
- an acceleration sensor (41) to measure the acceleration of each at least one seat (4),
- a passenger interface (5) comprising a screen (51) intended to display images to the passenger installed on said seat (4), the screen (51) being coupled to the seat (4) with which it is associated so as to remain in a fixed position relative to said seat (4), and
- a control unit (6) which is connected to the acceleration sensor (41) and to the associated seat (4), the control unit (6) being configured, on the one hand, to calculate a load factor experienced by the passenger installed on the corresponding seat (4) from the acceleration of said seat (4) and, on the other hand, to monitor the rotation of said seat (4) during the operation of the transport system (1) in order to maintain the position of the seat (4) fixed relative to the load factor experienced by the passenger throughout the flight,
**characterized in that** the screen (51) is configured to cover the entire field of vision of the passenger installed on the seat (4).

2. The transport system (1) according to claim 1, wherein said at least one seat (4) is fixedly mounted in a rotating cabin (7) along the axis (θ) installed in the vehicle (2).

3. The transport system (1) according to claim 2, wherein the rotating cabin (7) is installed in a chamber (8) which is fixed in the vehicle (2), the rotating cabin (7) being mounted in rotation along the axis (θ) in said chamber (8).

4. The transport system (1) according to claim 3, wherein the chamber (8) comprises two openings intended to allow the passage of the passenger, a first opening (81) forming a main opening for the installation and the departure of the passenger, a second opening (82) forming an emergency exit, the first opening (81) having a larger size than the second opening (82).

5. The transport system (1) according to any one of claims 2 to 4, wherein the rotating cabin (7) comprises a radiation shielding coating.

6. The transport system (1) according to claim 5, wherein the radiation shielding coating is made of polyethylene.

7. The transport system (1) according to any one of claims 1 to 6, wherein the control unit (6) is configured to maintain the speed of rotation of the seat (4) below a predefined threshold speed.

8. The transport system (1) according to any one of claims 1 to 7, wherein the passenger interface (5) comprises an audio speaker.

9. An assembly (E) comprising a space launcher (100) and a transport system (1) according to any of claims 1 to 8 installed on said space launcher (100).
